(19) Europäisches Patentamt
European Patent Office
Office européen des brevets

(11) **EP 2 032 404 B1**

(12) **EUROPÄISCHE PATENTSCHRIFT**

(45) Veröffentlichungstag und Bekanntmachung des Hinweises auf die Patenterteilung:
**22.01.2014 Patentblatt 2014/04**

(51) Int Cl.:
***B60T 8/17*** *(2006.01)*      ***B62L 3/08*** *(2006.01)*
***B60T 7/12*** *(2006.01)*

(21) Anmeldenummer: **07730077.0**

(22) Anmeldetag: **12.06.2007**

(86) Internationale Anmeldenummer:
**PCT/EP2007/055748**

(87) Internationale Veröffentlichungsnummer:
**WO 2007/144338 (21.12.2007 Gazette 2007/51)**

(54) **VERFAHREN ZUR REGELUNG DES DRUCKES IN EINEM ELEKTRONISCH GESTEUERTEN BREMSSYSTEM UND ELEKTRONISCHES BREMSSYSTEM**

METHOD FOR REGULATING THE PRESSURE IN AN ELECTRONICALLY CONTROLLED BRAKE SYSTEM, AND ELECTRONIC BRAKE SYSTEM

PROCÉDÉ DE RÉGULATION DE LA PRESSION DANS UN SYSTÈME DE FREINAGE À COMMANDE ÉLECTRONIQUE ET SYSTÈME DE FREINAGE ÉLECTRONIQUE

(84) Benannte Vertragsstaaten:
**DE FR**

(30) Priorität: **14.06.2006 DE 102006027999**
**30.05.2007 DE 102007025273**

(43) Veröffentlichungstag der Anmeldung:
**11.03.2009 Patentblatt 2009/11**

(73) Patentinhaber: **Continental Teves AG & Co. OHG**
**60488 Frankfurt (DE)**

(72) Erfinder:
• **WOYWOD, Jürgen**
**64546 Mörfelden (DE)**
• **CRESS, Torsten**
**36381 Schlüchtern (DE)**
• **KREMER, Michael**
**64846 Gross-Zimmern (DE)**

(56) Entgegenhaltungen:
**EP-A2- 0 812 747          WO-A-2004/071833**
**DE-A1- 19 912 878          DE-A1-102004 025 637**
**DE-A1-102004 051 119**

**Beschreibung**

Die Erfindung betrifft ein Verfahren gemäß Oberbegriff von Anspruch 1 sowie ein elektronisches Bremssystem gemäß Oberbegriff von Anspruch 11.

Das Kraftrad hat sich im Laufe der letzten Jahrzehnte von einem kostengünstigen Fortbewegungsmittel zu einem Freizeitgefährt entwickelt, bei welchem vermehrt sowohl die Sicherheit als auch der Komfort des Fahrers in den Vordergrund gerückt wird.

Ähnlich wie bei den Automobilen vor einigen Jahren werden zunehmend auch Krafträder mit Anti-Blockiersystemen (ABS) ausgerüstet. Aus der EP 0 548 985 B1 ist beispielsweise eine Blockierschutzvorrichtung für Krafträder bekannt. Ferner ist aus der DE 40 00 212 A1 ein Verfahren zum blockiergeschützten Bremsen eines Kraftrades und zum Bestimmen des Haftbeiwertes bekannt.

Traditionell haben Krafträder je ein Betätigungselement für jeden der beiden Bremskreise. Meist wird die Vorderradbremse durch einen "Handbremshebel" und die Hinterradbremse durch einen "Fußbremshebel" betätigt.

Im Zusammenhang mit Motorrädern versteht man unter einer "Integralbremsanlage" eine Bremsanlage, bei der bei Betätigung des Handbremshebels bzw. des Fußbremshebels zusätzlich die Bremse des zweiten Bremskreises durch einen aktiven Druckaufbau eingebremst wird. Durch Betätigen eines einzigen Betätigungselements können also beide Bremsen angesteuert werden. Werden bei Betätigung des Hand- und des Fußbremshebels jeweils beide Bremsen angesteuert, so bezeichnet man dies als Vollintegralbremse. Es sind jedoch auch Kombinationen möglich, bei denen ein Bremshebel auf ein Rad und der andere Bremshebel auf beide Räder wirkt (Teilintegralbremse). Integralbremsanlagen für Krafträder sind beispielsweise aus der DE 38 03 563 A1, DE 103 16 351 A1 und gattungsgemäßen DE 10 2004 051 119 A1 bekannt.

Bei Krafträdern mit Integralfunktion erfolgt aufgrund der Betätigung eines einzigen Betätigungselements (z.B. Handbremshebel und/oder Fußbremshebel) die automatische Bremskraftverteilung bzw. die Bremsdruckverteilung zwischen Vorderrad und Hinterrad entweder durch eine feste Hydraulikverschaltung, mittels welcher die Bremskraftverteilung in einem vorgegebenen Verhältnis unveränderbar vorgegeben ist, oder über eine Elektronik, mittels welcher die vorgegebene Bremskraftverteilung gesteuert wird. Bei den elektronischen Systemen mit Integralbremsfunktion und Antiblockierfunktion kann die Bremskraftverteilung zwischen Vorder- und Hinterrad bei einer ABS-Bremsung an die tatsächliche Beladung angepasst werden (Bremsenhandbuch, 2. Auflage Juli 2004, Vieweg Verlag, ISBN 3-528-13952-8, Seite 184-192).

Aus der DE 10 2005 003 255 A1 ist ein Bremssystem für Motorräder bekannt, welches bei einem konstruktiv einfachen Aufbau die Funktionalität von ABS und Integralbremse gewährleistet.

Aufgrund der erhöhten Sicherheit und/oder des gesteigerten Komforts ist es zu erwarten, dass es in Zukunft in immer stärkerem Maße zum Einsatz von Teil- und Vollintegralbremsen bei Motorrädern kommen wird, welche durch aktiven Druckaufbau an Vorder- und/oder Hinterrad den Fahrer beim Bremsvorgang unterstützen und damit für einen optimierten Bremsweg sorgen.

Zum Halten eines Motorrades an einer Steigung ist es bisher erforderlich gewesen, dass der Fahrer das Fahrzeug durch Betätigung der Vorderrad- und/oder der Hinterradbremse am Wegrollen hindert. Bei Motorrädern ohne Integralbremsanlage kann dabei bei großen Steigungen die Betätigung des Handbremshebels (Vorderradbremse) alleine unter Umständen nicht ausreichen, um das Fahrzeug sicher zu halten. Der Fahrer muss dann auch den Fußbremshebel betätigen, um das Fahrzeug zu halten.

Sowohl bei Motorrädern mit Integralbremsanlage als auch bei Motorrädern ohne Integralbremsanlage wird bei einem Halten des Fahrzeuges durch Handbremshebelbetätigung beim anschließenden Anfahren ein relativ komplexer, feinmotorischer Bewegungsablauf erforderlich, da sowohl der Handbremshebel als auch der Gashebel mit der rechten Hand bedient werden müssen. Dies stellt auch für einen geübten Fahrer eine Herausforderung dar.

Die Betätigung des Fußbremshebels zum Halten des Motorrades stellt insbesondere kleinere Fahrer vor große Herausforderungen, da nun nur noch ein Bein zur Stabilisierung des Motorrades zur Verfügung steht.

Der Erfindung liegt daher die Aufgabe zugrunde, ein Verfahren zur Regelung des Bremsdruckes in einem elektronisch gesteuerten Bremssystem eines Kraftrades, insbesondere in einem Integralbremssystem für ein Motorrad, und ein elektronisches Bremssystem für ein Kraftrad, insbesondere ein Integralbremssystem für ein Motorrad, zur Verfügung zustellen, welches die Wahrscheinlichkeit für ein Umstürzen des Kraftrades reduziert.

Diese Aufgabe wird erfindungsgemäß durch das Verfahren gemäß Anspruch 1 sowie das elektronische Bremssystem gemäß Anspruch 11 gelöst.

Der Erfindung liegt der Gedanke zugrunde, aktiv einen Bremsdruck in dem Hinterradbremskreis aufzubauen und dann zu halten, wenn das Motorrad stillsteht oder annähernd stillsteht, und eine Aktivierungsbedingung erfüllt ist. Damit wird ein Wegrollen des Motorrades verhindert bzw. ein Halten und eine Stabilisierung des Motorrades erreicht.

Bevorzugt wird das Verfahren durchgeführt, um das Kraftrad nach Beendigung einer Bremsbetätigung, z.B. einer Betätigung des Handbremshebels, durch einen Fahrer zu halten und/oder zu stabilisieren und/oder am Wegrollen zu hindern.

Gemäß einer bevorzugten Ausführungsform ist die Aktivierungsbedingung ein Erkennen des Stehens des Kraftrades auf einer geneigten Fahrbahn. Gerade beim Halten des Kraftrades an einer Steigung oder einem Gefälle ist eine Unterstützung des Motorradfahrers durch das Bremssystem vorteilhaft. Dabei wird die Erkennung einer geneigten Fahrbahn besonders bevorzugt anhand eines Längsbeschleunigungssensors durchgeführt. Der Beschleunigungssensor ist ganz besonders bevorzugt am Rahmen des Kraftrades befestigt, da er dort wenigen Erschütterungen ausgesetzt ist. Ganz besonders vorteilhaft ist dabei eine Anbringung des Beschleunigungssensors im Bereich des Schwerpunktes des Kraftrades.

Alternativ oder zusätzlich ist es bevorzugt, dass die Aktivierungsbedingung eine charakteristische Betätigung eines Bremsbetätigungselements durch den Fahrer ist. Hierdurch erhält der Fahrer die Möglichkeit, das Einsetzen des Bremsdruckaufbaus selbst zu kontrollieren. Er kann die Halte-Funktion somit gemäß seiner Wünsche und/oder der gegebenen Situation aktivieren. Besonders bevorzugt wird eine charakteristische Betätigung des Handbremshebels als Aktivierungsbedingung ausgeführt.

Die charakteristische Betätigung des Bremsbetätigungselements ist bevorzugt eine Betätigung des Bremsbetätigungselements, welche stärker ist als die Betätigung des Bremsbetätigungselements, welche zum Anhalten des Kraftrades notwendig war. Durch ein stärkeres Anziehen des Handbremshebels oder ein stärkeres Treten des Fußbremshebels am Ende der Bremsung zum Anhalten kann der Fahrer somit die Halte-Funktion einfach aktivieren. Besonders bevorzugt wird die Betätigung des Bremsbetätigungselements dann als Aktivierungsbedingung erkannt, wenn der durch die Betätigung hervorgerufene Hauptzylinderdruck um einen vorgegebenen Betrag größer ist als der Hauptzylinderdruck, welcher beim Anhalten des Kraftrades auftrat.

Ein Stillstehen oder annährendes Stillstehen des Kraftrades wird bevorzugt mit Hilfe eines Raddrehzahlsensors erkannt. Besonders bevorzugt wird das Stillstehen oder annährende Stillstehen daran erkannt, dass die Raddrehzahl(en) eines Rades oder beider Räder kleiner als ein vorgegebener Schwellenwert ist. Hierdurch ist bei Verwendung moderner Raddrehzahlsensoren eine sehr genaue Festlegung der gewünschten Grenzgeschwindigkeit möglich. Ebenso ist es besonders bevorzugt anstelle der Raddrehzahl eine andere Raddrehgeschwindigkeitsgröße, welche der Raddrehzahl entspricht, zur Stillstandserkennung zu betrachten.

Die Stärke des Bremsdrucks, welcher im Rahmen der Halte-Funktion aufgebaut wird, bzw. die Stärke der Bremsdruckerhöhung, welche im Rahmen der Halte-Funktion durchgeführt wird, ist bevorzugt fest vorgegeben. Hierzu sind entsprechende Angaben besonders bevorzugt in dem Bremsensteuergerät abgelegt.

Es ist aber auch bevorzugt, die Stärke des Bremsdrucks, welcher im Rahmen der Halte-Funktion aufgebaut wird, bzw. die Stärke der Bremsdruckerhöhung, welche im Rahmen der Halte-Funktion durchgeführt wird, in Abhängigkeit von einem Umgebungsparameter und/oder einer Zustandsgröße des Kraftrades zu wählen. Hierdurch ist eine situationsgerechte Wahl der Stärke des Bremsdrucks bzw. der Stärke der Bremsdruckerhöhung gegeben, welche das Halten des Motorrades sicher gewährleistet, aber auch keine unnötige Überdimensionierung des Bremsdruckes zur Folge hat. Besonders bevorzugt wird die Stärke des Bremsdrucks, welcher im Rahmen der Halte-Funktion eingesteuert wird, in Abhängigkeit des zum Halten benötigten Bremsdruckes gewählt. Ganz besonders bevorzugt wird der Halte-Bremsdruck als der im Moment des Anhaltens des Motorrades vorliegende Bremsdruck erhöht um einen vorgegebenen Wert gewählt.

Gemäß einer bevorzugten Ausführungsform wird die Stärke des Bremsdrucks, welcher im Rahmen der Halte-Funktion aufgebaut wird, bzw. die Stärke der Bremsdruckerhöhung, welche im Rahmen der Halte-Funktion durchgeführt wird, in Abhängigkeit von der Stärke der Neigung der Fahrbahn bemessen. Die Stärke der Fahrbahnneigung wird dabei besonders bevorzugt mittels eines Längsbeschleunigungssensors bestimmt. Die Dimensionierung des Halte-Bremsdruckes in Abhängigkeit von der Fahrbahnneigung ist vorteilhaft, um ein sicheres Halten auch an sehr steilen Hängen sicher zu stellen.

Alternativ oder zusätzlich wird die Stärke des Bremsdrucks bzw. die Stärke der Bremsdruckerhöhung bevorzugt in Abhängigkeit von dem Beladungszustand des Kraftrades und/oder dem Typ des Kraftrades gewählt. So wird ein sicheres Halten des Kraftrades auch für schwere Motorräder und/oder schweres Gepäck gewährleistet.

Wenn erkannt wird, dass der Fahrer wieder anfahren möchte, so wird gemäß einer bevorzugten Ausführungsform des erfindungsgemäßen Verfahrens der durch die Halte-Funktion aktiv aufgebaute und gehaltene Bremsdruck wieder abgebaut. Der Abbau geschieht besonders bevorzugt über eine lineare Funktion. Dadurch erhält der Fahrer Gelegenheit, den Gashebel entsprechend zu betätigen, so dass das Motorrad ohne Zurückrollen anfährt. Alternativ ist es besonders bevorzugt, den Bremsdruck zunächst sprunghaft um einen vorgegebenen Wert und dann gemäß einer linearen Funktion zu reduzieren. Ganz besonders bevorzugt ist die Steigung der linearen Funktion vorgegeben. Ebenso ist es ganz besonders bevorzugt, dass die Größe des Sprungs der Bremsdruckreduktion vorgegeben ist. Vorteilhafterweise entspricht der Betrag des Sprungs der Bremsdruckreduktion demjenigen vorgegebenen Wert, welcher auf den im Moment des Anhaltens des Motorrades vorliegende Bremsdruck addiert wird, um den Halte-Bremsdruck zu erhalten.

Gemäß einer anderen bevorzugten Ausführungsform wird der Abbau des Bremsdrucks in Abhängigkeit von einem Umgebungsparameter und/oder einer Zustandsgröße des Kraftrades durchgeführt. Besonders bevorzugt wird der Bremsdruck über eine lineare Funktion reduziert, deren Steigung in Abhängigkeit der Stärke der Neigung der Fahrbahn und/oder des Motormoments und/oder des zum Halten nötigen Bremsdrucks und/oder des Drosselklappenwinkels gewählt wird.

Ein Anfahren des Kraftrades wird bevorzugt durch Betrachtung von Zustandsgrößen des Kraftrades erkannt. Hierfür werden besonders bevorzugt der Drosselklappenwinkel und/oder die Motordrehzahl und/oder das Motormoment ausgewertet.

In dem Falle, dass die Aktivierungsbedingung die Betätigung eines Bremsbetätigungselements ist, wird der durch die Halte-Funktion in dem Radbremskreis gehaltene Bremsdruck bevorzugt dann wieder abgebaut, wenn die Aktivierungsbedingung noch einmal eintritt. So kann der Fahrer vorteilhafterweise entsprechend seinen Wünschen die Halte-Funktion durch wiederholtes Betätigen des Bremsbetätigungselements schnell und einfach ein- und ausschalten. Besondere bevorzugt wird der Bremsdruck bei Deaktivierung der Halte-Funktion, auf Null abgebaut. Dies geschieht ganz besondere bevorzugt sprungartig oder über eine lineare Funktion.

Die Erfindung betrifft auch ein elektronisches Bremssystem eines Motorrads, in welchem ein Verfahren gemäß mindestens einem der Ansprüche 1 bis 10 durchgeführt wird.

Ein Vorteil der Erfindung liegt in der verbesserten Sicherheit beim Halten und Anfahren an einem Hang. Durch die Erfindung wird der Motorradfahrer entlastet, und so kann er sich besser auf den Verkehr konzentrieren. Ebenso wird durch die Erfindung die Wahrscheinlichkeit für ein Umstürzen des Motorrades beim Halten z.B. an einer Ampel an einem Hang reduziert, da der Fahrer beide Beine zum Stabilisieren des Motorrades einsetzen kann, da er nicht den Fußbremshebel zum Halten des Motorrades betätigen muss.

Weitere bevorzugte Ausführungsformen der Erfindung ergeben sich aus den Unteransprüchen und der nachfolgenden Beschreibung anhand von Figuren.

Es zeigen schematisch

Fig. 1     eine beispielsgemäße Teilintegralbremsanlage eines Motorrades zur Durchführung eines erfindungsgemäßen Verfahrens,

Fig. 2     eine Darstellung eines Motorrades an einem Hang,

Fig. 3     ein Flussdiagramm eines Ausführungsbeispiels eines erfindungsgemäßen Verfahrens, und

Fig. 4     ein Flussdiagramm des Ausführungsbeispiels aus Fig. 3 ergänzt um ein Ausführungsbeispiel einer erfindungsgemäßen Anfahrtserkennung.

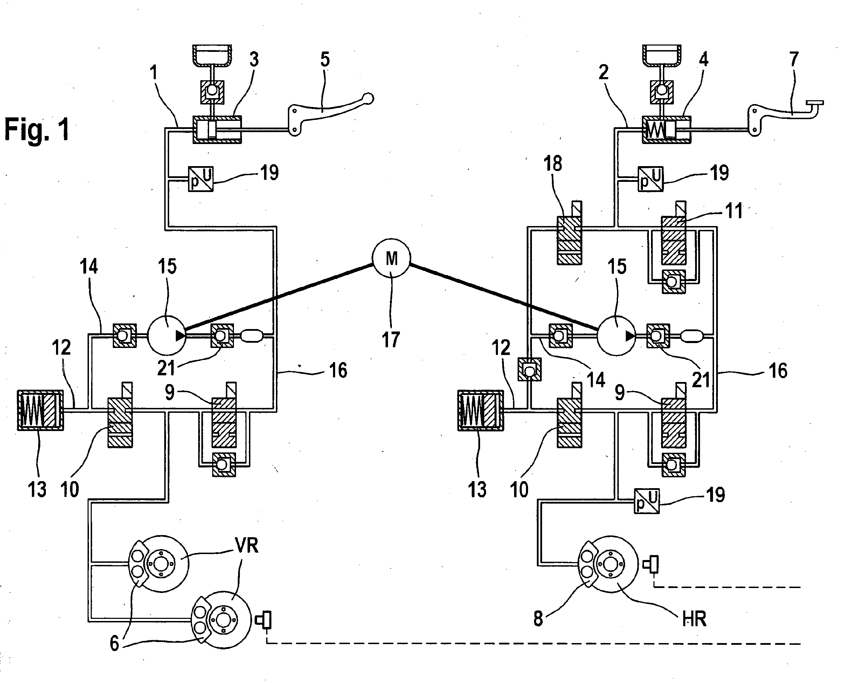

Das erfindungsgemäße Verfahren wird im Folgenden anhand einer Motorrad-Bremsanlage mit Teilintegralbremsfunktion (siehe Fig. 1) beschrieben, es kann jedoch auch in jeder anderen Bremsanlage durchgeführt werden, in welcher ein aktiver Aufbau von Bremsdruck durchgeführt wird. Z.B. kann das Verfahren in einer Motorrad-Vollintegral-Bremsanlage durchgeführt werden.

In Fig. 1 ist eine beispielsgemäße Teilintegralbremsanlage für ein Kraftrad schematisch dargestellt. Diese besteht aus zwei Bremskreisen 1, 2, einem für das Vorderrad VR und einem für das Hinterrad HR mit jeweils einem Hauptbremszylinder 3, 4. Mit einem Handbremshebel 5 betätigt der Fahrer direkt die Vorderradbremse 6 und mit einem Fußpedal 7 wird die Hinterradbremse 8 betätigt.

Zur Bremsschlupfregelung sind sowohl im Vorderrad- als auch Hinterradbremskreis 1, 2 elektromagnetisch betätigbare Ein- und Auslassventile 9, 10 angeordnet, wobei jeweils ein in Grundstellung geöffnetes Einlassventil 9 in die Bremsleitung des Vorder- und des Hinterradbremskreises 1, 2 eingesetzt ist, welche den jeweils zugehörigen Hauptbremszylinder 3, 4 mit der Vorderrad- oder der Hinterradbremse 6, 8 verbindet. Im Hinterradbremskreis 2 befindet sich zusätzlich ein in Grundstellung geöffnetes Trennventil 11. Das in Grundstellung geschlossene Auslassventil 10 ist jeweils in eine Rücklaufleitung 12 eines jeden Bremskreises eingesetzt, welche die Vorder- oder Hinterradbremse 6, 8 mit jeweils einem Niederdruckspeicher 13 und dem Saugpfad 14 einer zweikreisig aufgeteilten Pumpe 15 verbindet, die nach dem Rückförderprinzip arbeitet. Die Pumpe 15 steht druckseitig mit den Bremsleitungen 16 beider Bremskreise in Verbindung, sodass in einer Bremsschlupfregelphase eine bedarfsgerechte Rückförderung des jeweils von der Vorder- bzw. Hinterradbremse 6, 8 abgelassenen Bremsflüssigkeitsvolumens in die Bremsleitungen 16 beider Bremskreise gewährleistet ist. Die Pumpkolben der beiden Pumpenkreise werden gemeinsam von einem Elektromotor 17 angetrieben.

Beide Bremskreise 1, 2 sind entsprechend ihrem schaltungstechnischen Aufbau gemeinsam als auch unabhängig voneinander betätigbar, mit der Besonderheit, dass bei einer manuellen Betätigung des am Vorderradbremskreis 1 angeschlossenen Hauptbremszylinders 3 nicht nur ein Bremsdruckaufbau in der Vorderradbremse 6, sondern gleichzeitig auch ein elektrohydraulischer Bremsdruckaufbau (aktiver Druckaufbau) in der Hinterradbremse 8 erfolgt, indem der Elektromotor 17 die Pumpe 15 in Betrieb setzt, sobald infolge der im Hinterradbremskreis 2 elektrisch initiierten Offenstellung des Umschaltventils 18 die Pumpe 15 Druckmittel vom Hauptbremszylinder 4 entnimmt und zur Hinterradbremse 8 fördert, während das Trennventil 11 im Hinterradbremskreis 2 die Pumpendruckseite vom Hauptbremszylinder 4 trennt.

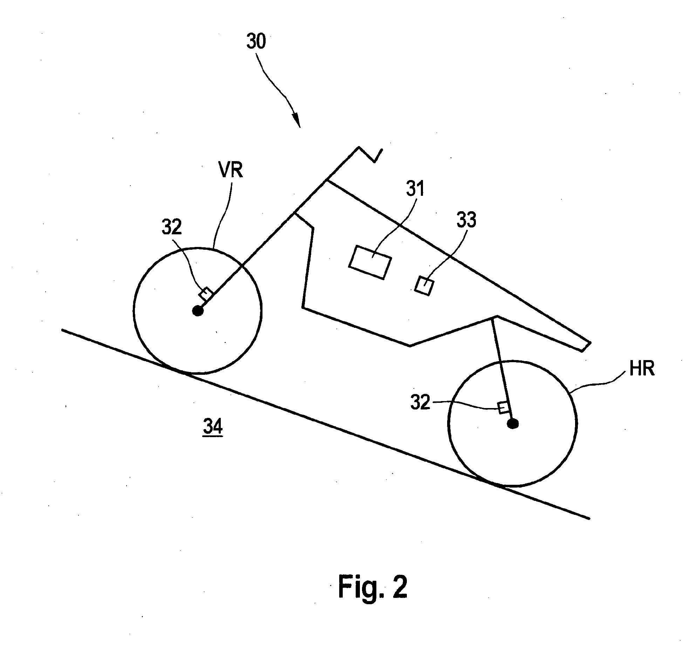

Fig. 2 zeigt eine schematische Darstellung eines beispielgemäßen Motorrades an einem Hang. Motorrad 30 mit Steuergerät 31, je einem Raddrehzahlsensor 32 an Vorderrad VR und Hinterrad HR sowie Längsbeschleunigungssensor 33 befindet sich an Hang 34. Motorrad 30 ist beispielsgemäß mit der in Fig. 1 dargestellten Teilintegralbremsanlage ausgestattet. Steuergerät 31 ist für die Steuerung der Bremsanlage und für die Steuerung der Durchführung eines erfindungsgemäßen Verfahrens (Halte-Funktion bzw. Halte- und Anfahr-Funktion) ausgelegt. Beschleunigungssensor 33 ist beispielsgemäß am Rahmen des Kraftrades angeordnet.

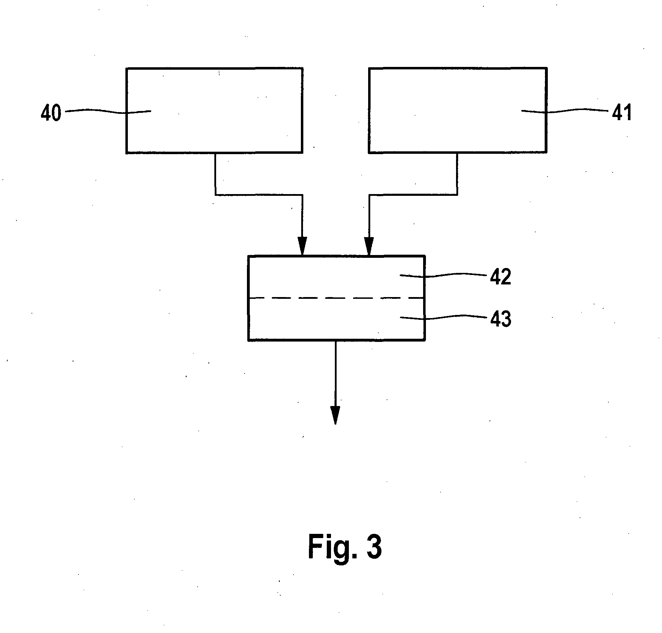

In Fig. 3 ist in Form eines schematischen Flussdiagramms ein Ausführungsbeispiel eines erfindungsgemäßen Verfahrens dargestellt. In Block 40 wird überprüft, ob Motorrad 30 stillsteht oder annähernd stillsteht. In Block 41 wird überprüft, ob eine Aktivierungsbedingung erfüllt ist. Wenn beide Bedingungen gleichzeitig oder zeitnah nacheinander erfüllt sind, so wird in einem Radbremskreis 1, 2, beispielsweise in dem Hinterradbremskreis 2, zuerst ein Bremsdruck aktiv aufgebaut (Block 42) und dann dieser Bremsdruck (annährend) gehalten (Block 43).

Erfindungsgemäß ist es also möglich, durch einen aktiven Druckaufbau, z.B. im Hinterradbremskreis 2, das Fahrzeug 30 am Berg 34 sicher zu halten, ohne dass vom Fahrer eine weitere Bremsenbetätigung an einem der Bremsbetätigungselemente 5, 7 notwendig ist.

Ein Stillstehen oder annährendes Stillstehen des Kraftrades 30 (Block 40) wird beispielsgemäß anhand der Signale der Raddrehzahlsensoren 32 erkannt. Ist die Raddrehzahl z.B. des Hinterrades HR kleiner als ein vorgegebener Schwellenwert, so wird ein (annährender) Stillstand des Motorrades 30 erkannt. Anstelle der Raddrehzahl kann auch eine andere Raddrehgeschwindigkeitsgröße, welche der Raddrehzahl entspricht, zur Stillstanderkennung herangezogen werden.

Im Folgenden sind zwei Ausführungsbeispiele einer Aktivierungsbedingung der Halte-Funktion (Block 41) ausgeführt.

Gemäß eines ersten Ausführungsbeispiels ist die Aktivierungsbedingung (Block 41) ein Erkennen des Stehens des Kraftrades 30 auf einer geneigten Fahrbahn 34. Das Erkennen einer geneigten Fahrbahn 34 kann z.B. anhand eines Längsbeschleunigungssensors 33 geschehen. Durch Sensor 33 wird die Hangneigung erkannt und gemessen. Ab einer einstellbaren Schwelle (z.B. 5% Steigung bzw. Gefälle) ist das System bezüglich der Halte-Funktion in Bereitschaft.

Wird Fahrzeug 30 nun an einem ausreichend steilen Hang zum Stillstand gebracht (Block 40), so wird vom Bremssystem ein definierter Druck im Hinterradbremskreis 2 aufgebaut (Block 42). Der Bremsdruck wird dann vom System über Trennventil 11 "eingesperrt", d.h. der Bremsdruck wird (annährend) konstant gehalten (Block 43). Der Druck bleibt auch dann (annährend) konstant, wenn der Fahrer nach dem Stillstand des Kraftrades 30 den Handbremshebel 5 und/oder Fußbremshebel 7 wieder löst oder teilweise löst.

Die Größe des im Hinterradbremskreis 2 aufgebauten Bremsdruckes (Haltebremsdruck) hängt z.B. vom Fahrzeugtyp und/oder der jeweiligen gemessenen Hangneigung ab. Die Größe des Bremsdruckes kann aber auch alternativ oder zusätzlich von dem Beladungszustand des Kraftrades 30 abhängen. Beispielsgemäß ist der Druck gerade so bemessen, dass Motorrad 30 auch bei voller Beladung sicher am Hang 34 gehalten wird.

Gemäß eines zweiten Ausführungsbeispiels ist die Aktivierungsbedingung (Block 41) eine Betätigung eines Bremsbetätigungselements, z.B. des Handbremshebels 5. Bei diesem Ausführungsbeispiel muss Motorrad 30 also keinen Längsbeschleunigungssensor 33 besitzen. Die Aktivierung des aktiven Bremsdruckaufbaus erfolgt nun also fahrerseitig über eine Betätigung eines Bremshebels 5, 7 bei oder nach erkanntem (annährenden) Stillstand (Block 40) des Motorrades 30.

Um bei dem zweiten Ausführungsbeispiel die Halte-Funktion (aktiver Druckaufbau mit anschließendem Druckhalten) zu aktivieren, betätigt der Fahrer die Vorderradbremse 6 (rechter Handbremshebel 5, beispielsgemäß inklusive Integralfunktion) mit einem höheren Druck $p'_{HZ}$ als dem Druck $p_{HZ}$, welcher zur Erzielung des Fahrzeug-Stillstandes benötigt wurde ($p'_{HZ} > p_{HZ}$). Daraufhin wird vom System ein ausreichender Druck im Hinterradbremskreis 2 aufgebaut (Block 42) und dann gehalten (Block 43), um das Motorrad am Hang 34 zu halten (entsprechend den Ausführungen zum ersten Ausführungsbeispiel).

Beispielsgemäß muss der Fahrer zur Aktivierung der Halte-Funktion Bremshebel 5 mit einem Druck $p'_{HZ}$ betätigen, welcher um eine vorgegebene oder einstellbare Druckdifferenz $\Delta p$ größer ist als der Druck $p_{HZ}$, welcher zum Anhalten des Motorrades 30 nötig war ($p'_{HZ} \geq p_{HZ} + \Delta p$). Die Druckdifferenz $\Delta p$ beträgt z.B. einige bar, z.B. etwa zehn bar ($\Delta p \cong 10bar$).

Bei dem zweiten Ausführungsbeispiel ist die Größe des im Hinterradbremskreis 2 aufgebauten Bremsdruckes nicht von der Hangneigung 34 abhängig, da kein Sensor zur Bestimmung der Hangneigung vorhanden ist. Die Größe der aktiven Druckerhöhung (oder die Größe des Bremsdruckes) nach Fahrzeugstillstand kann in allen Fällen gleich sein (d.h. ein vorgegebener, konstanter Wert) oder in Abhängigkeit von Parametern, z.B. dem Beladungszustand des Motorrades 30 und/oder dem Motorradtyp, gewählt werden. Beispielsgemäß ist auch hier der Druck gerade so bemessen, dass Motorrad 30 auch bei voller Beladung sicher am Hang 34 gehalten wird.

Das Aufrechterhalten des Bremsdruckes durch die Haltefunktion (Block 43) kann, falls der Fahrer nicht anfahren möchte, zeitlich unbegrenzt oder bis zu einer vorgebbaren oder einstellbaren Maximalzeit durchgeführt werden.

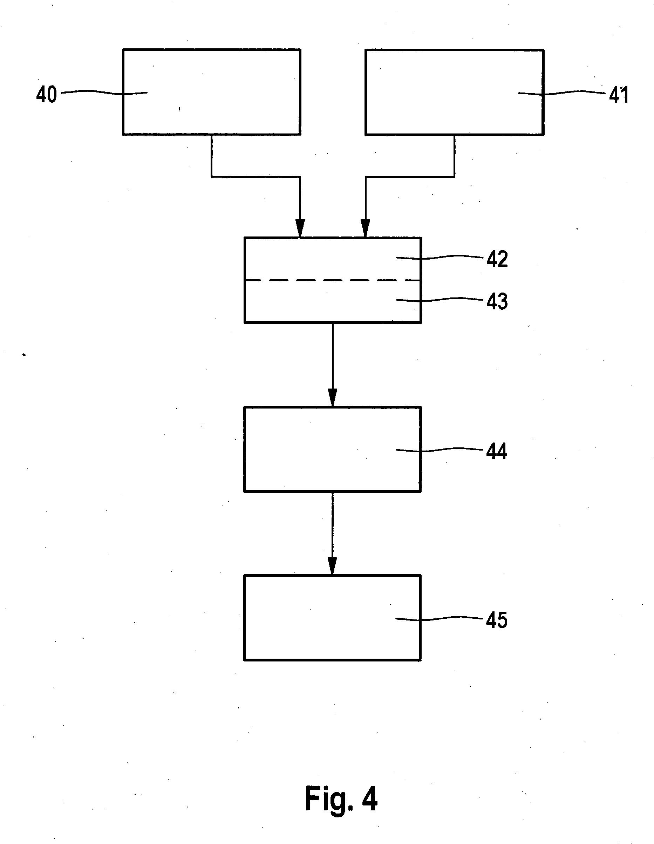

In Fig. 4 ist ein weiteres Ausführungsbeispiel eines erfindungsgemäßen Verfahrens schematisch als Flussdiagramm dargestellt, bei welchem das in Fig. 3 dargestellte Ausführungsbeispiel (Halte-Funktion) um eine Anfahr-Funktion erweitert wurde. Die Blöcke 40 bis 43 wurden oben in der Beschreibung zu Fig. 3 ausführlich beschrieben, und das dort gesagte gilt ebenso für das in Fig. 4 dargestellte Ausführungsbeispiel. Zusätzlich wird in dem Ausführungsbeispiel aus Fig. 4 in Block 44 überprüft, ob der Fahrer anfährt oder anfahren möchte (Anfahrerkennung). Wenn dies der Fall ist, wird der bis dahin aufrechterhaltene Bremsdruck (Block 43) wieder abgebaut (Block 45).

Anfahrvorgänge, und damit ein Ende der Halte-Funktion, werden z.B. vom System erkannt. Eine Anfahrtserkennung geschieht z.B. durch Beobachtung des Drosselklappenwinkels und/oder der Motordrehzahl und/oder des Antriebsmomentes/Motormomemtes.

Der zuvor "eingesperrte" Bremsdruck (Block 43) im Hinterradbremskreis 2 wird bei erkannter Anfahrsituation (Block 44) über eine, z.B. vorgegebene, Rampenfunktion gezielt in der Art abgebaut, dass der Fahrer problemlos, ohne Rückrollbewegung anfahren kann. Dazu wird der Abbau des Bremsdrucks beispielsgemäß in Abhängigkeit von der Stärke der Neigung der Fahrbahn 34 durchgeführt. Der Bremsdruckabbau kann auch in Abhängigkeit von Fahrzeug-Parametern abgebaut werden, z.B. in Abhängigkeit des Motormomentes. Bei einem Fahrzeug ohne Motormomentenschnittstelle wird beispielsgemäß nach dem Erkennen des Anfahrens der Bremsdruck zeitgesteuert reduziert, z.B. gemäß einer linearen Funktion oder zunächst sprunghaft um einen vorgegebenen Wert und dann gemäß einer linearen Funktion. Bei einem Fahrzeug mit Motormomentenschnittstelle wird der Bremsdruck beispielsgemäß umgekehrt proportional zum Motormoment reduziert.

Gemäß eines Ausführungsbeispiels wird der Bremsdruckabbau gemäß einer linearen Funktion durchgeführt, deren Steigung (Bremsdruckabbaugradient) in Abhängigkeit von dem Drosselklappenwinkel und/oder dem Haltebremsdruck gewählt wird. Der Bremsdruckabbaugradient hängt also davon ab, wie viel Gas der Fahrer gibt und/oder wie hoch der benötigte Haltedruck war. Beispielsgemäß wird der Bremsdruckabbaugradient DG aus dem Produkt eines ersten Polynoms P1 in Abhängigkeit vom Drosselklappenwinkel $\alpha$ mit einem zweiten Polynom P2 in Abhängigkeit vom Haltedruck $p_{Halt}$ berechnet:

$$DG = P1(\alpha) * P2(p_{Halt})$$

Die Polynome werden derart gewählt, dass für das entsprechende Fahrzeug ein komfortables Anfahren ohne Zurückrollen gewährleistet ist.

Wurde die Halte-Funktion durch Betätigung eines Bremshebels aktiviert, so ist es zusätzlich oder alternativ möglich, die Halte-Funktion durch eine zweite Bremshebelbetätigung, analog zur Aktivierung, manuell zu beenden. Wird z.B. der Handbremshebel 5 nach Aktivierung der Halte-Funktion ein weiteres Mal durch den Fahrer mit einem höheren Druck $p'_{HZ}$ als dem Druck $p_{HZ}$, welcher zur Erzielung des Fahrzeug-Stillstandes benötigt war, betätigt, so wird der aktiv aufgebaute und gehaltene Bremsdruck dann wieder abgebaut. Der Bremsdruck wird dazu z.B. auf Null bar geregelt. Der Abbau kann sprungartig oder über eine Rampe geschehen.

Allgemein gilt, dass für die (erstmalige) Erzielung des Stillstandes (Anhalten) der Fahrer und für die Erhaltung des Stillstandes die Halte-Funktion verantwortlich ist.

Kombinationen der beiden Ausführungsbeispiele, d.h. Hang/Gefälle-Erkennung und Bremshebelbetätigung zur Aktivierung der Halte-Funktion, sind ebenfalls vorstellbar.

## Patentansprüche

1. Verfahren zur Regelung des Bremsdruckes in einem elektronisch gesteuerten Bremssystem, insbesondere Integralbremssystem, eines Kraftrades (30), **dadurch gekennzeichnet, dass** ein Bremsdruck, welcher ein Wegrollen des Kraftrades (30) verhindert, in dem Hinterradbremskreis (2) aktiv aufgebaut (42) und dann aufrechterhalten (43) wird, wenn

   - das Kraftrad (30) zu einem Stillstand kommt oder stillsteht oder annähernd stillsteht (40), und
   - eine Aktivierungsbedingung erfüllt ist (41).

2. Verfahren nach Anspruch 1, **dadurch gekennzeichnet, dass** die Aktivierungsbedingung (41) ein Erkennen des Stehens des Kraftrades auf einer geneigten Fahrbahn (34), insbesondere mittels eines Längsbeschleunigungssensors (33), und/oder eine Betätigung eines Bremsbetätigungselements (5), welche mindestens eine vorgegebene Bedingung erfüllt, ist.

3. Verfahren nach Anspruch 2, **dadurch gekennzeichnet, dass** die Aktivierungsbedingung (41) eine Betätigung ($p'_{HZ}$) des Bremsbetätigungselements (5) ist, welche stärker ist als die Betätigung ($p_{HZ}$) des Bremsbetätigungselements (5), welche zum Anhalten des Kraftrades notwendig war.

4. Verfahren nach mindestens einem der Ansprüche 1 bis 3, **dadurch gekennzeichnet, dass** das Stillstehen oder annähernde Stillstehen (40) des Kraftrades (30) mit Hilfe mindestens eines Raddrehzahlsensors (32) erkannt wird, insbesondere dass ein Stillstehen oder annährendes Stillstehen (40) erkannt wird, wenn eine Raddrehzahl oder eine der Raddrehzahl entsprechende Raddrehgeschwindigkeitsgröße einen Schwellenwert unterschreitet.

5. Verfahren nach mindestens einem der Ansprüche 1 bis 4, **dadurch gekennzeichnet, dass** der Betrag des aufgebauten Bremsdrucks oder der Betrag der Bremsdruckerhöhung vorgegeben ist oder in Abhängigkeit von mindestens einem Umgebungsparameter (34) und/oder einer Zustandsgröße des Kraftrades (30), insbesondere in Abhängigkeit des zum Halten benötigten Bremsdrukkes, gewählt wird.

**6.** Verfahren nach Anspruche 5, **dadurch gekennzeichnet, dass** der Betrag des aufgebauten Bremsdrucks oder der Betrag der Bremsdruckerhöhung in Abhängigkeit der Stärke der Neigung der Fahrbahn (34) und/oder des Beladungszustandes des Kraftrades (30) und/oder des Typs des Kraftrades (30) gewählt wird.

**7.** Verfahren nach mindestens einem der Ansprüche 1 bis 6, **dadurch gekennzeichnet, dass** der in dem Radbremskreis (2) aufrechterhaltene Bremsdruck (43) bei einem Anfahren (44) des Kraftrades (30), insbesondere sprunghaft und/oder über eine lineare Funktion, wieder abgebaut wird (45).

**8.** Verfahren nach Anspruch 7, **dadurch gekennzeichnet, dass** das Anfahren des Kraftrades (30) anhand von mindestens einer Zustandsgröße des Kraftrades (30) erkannt wird (44), insbesondere anhand eines Drosselklappenwinkels und/oder einer Motordrehzahl und/oder eines Motormoments.

**9.** Verfahren nach Anspruch 7 oder 8, **dadurch gekennzeichnet, dass** der Abbau des Bremsdrucks (45) in Abhängigkeit von mindestens einem Umgebungsparameter (34) und/oder einer Zustandsgröße des Kraftrades (30) durchgeführt wird, insbesondere in Abhängigkeit mindestens einer der folgenden Größen: Stärke der Neigung der Fahrbahn (34), Motormoment, Haltebremsdruck, Drosselklappenwinkel.

**10.** Verfahren nach mindestens einem der Ansprüche 2 bis 9, **dadurch gekennzeichnet, dass** für den Fall, dass die Aktivierungsbedingung (41) die Betätigung eines Bremsbetätigungselements (5) ist, der in dem Radbremskreis (2) aufrechterhaltene Bremsdruck (43) wieder abgebaut wird (45), wenn die Aktivierungsbedingung (41) nochmals eintritt.

**11.** Elektronisches Bremssystem, insbesondere Integralbremssystem, für ein Motorrad (30), **dadurch gekennzeichnet, dass** in diesem ein Verfahren gemäß mindestens einem der Ansprüche 1 bis 10 durchgeführt wird.

**Claims**

**1.** Method for regulating the brake pressure in an electronically-controlled brake system, in particular an integral brake system, of a motorcycle (30), **characterized in that** a brake pressure which prevents the motorcycle (30) from rolling away is actively built up (42) in the rear wheel brake circuit (2) and is then maintained (43) if

- the motorcycle (30) comes to a standstill or is at a standstill or is approximately at a standstill (40), and
- an activation condition is fulfilled (41).

**2.** Method according to Claim 1, **characterized in that** the activation condition (41) is a detection that the motorcycle is stationary on an inclined roadway (34), in particular by means of a longitudinal acceleration sensor (33), and/or an actuation of a brake actuating element (5) which fulfills at least one predefined condition.

**3.** Method according to Claim 2, **characterized in that** the activation condition (41) is an actuation ($p'_{HZ}$) of the brake actuating element (5) which is stronger than the actuation ($p_{HZ}$) of the brake actuating element (5) which was necessary in order to stop the motorcycle.

**4.** Method according to at least one of Claims 1 to 3, **characterized in that** the standstill or approximate standstill (40) of the motorcycle (30) is detected by means of at least one wheel rotational speed sensor (32), in particular **in that** a standstill or approximate standstill (40) is detected when a wheel rotational speed, or a wheel rotational speed value corresponding to the wheel rotational speed, falls below a threshold value.

**5.** Method according to at least one of Claims 1 to 4, **characterized in that** the amount of brake pressure built up or the amount of brake pressure increase is predetermined or is selected as a function of at least one environmental parameter (34) and/or of a state value of the motorcycle (30), in particular as a function of the brake pressure required for holding.

**6.** Method according to Claim 5, **characterized in that** the amount of brake pressure built up or the amount of brake pressure increase is selected as a function of the amount of inclination of the roadway (34) and/or of the load state of the motorcycle (30) and/or of the motorcycle (30) type.

**7.** Method according to at least one of Claims 1 to 6, **characterized in that** the brake pressure (43) maintained in the wheel brake circuit (2) is reduced again (45), in particular discontinuously and/or by means of a linear function, upon starting (44) of the motorcycle (30).

**8.** Method according to Claim 7, **characterized in that** the starting of the motorcycle (30) is detected (44) with reference to at least one state value of the motorcycle (30), in particular with reference to a throttle angle and/or an engine speed and/or an engine torque.

**9.** Method according to Claim 7 or 8, **characterized in that** the reduction of the brake pressure (45) is effected as a function of at least one environmental parameter (34) and/or of a state value of the motorcycle (30), in particular as a function of at least one of the following values: amount of inclination of the roadway (34), engine torque, holding brake pressure, throttle angle.

**10.** Method according to at least one of Claims 2 to 9, **characterized in that**, if the activation condition (41) is the actuation of a brake actuating element (5), the brake pressure (43) maintained in the wheel brake circuit (2) is reduced again (45) if the activation condition (41) recurs.

**11.** Electronic brake system, in particular an integral brake system, for a motorcycle (30), **characterized in that** a method according to at least one of Claims 1 to 10 is carried out therein.

## Revendications

**1.** Procédé de régulation de la pression de freinage dans un système de freinage à commande électronique, en particulier un système de freinage intégré, d'un motocycle (30), **caractérisé en ce qu'**une pression de freinage, qui empêche le roulement du motocycle (30), est activement développée (42) dans le circuit de frein de la roue arrière (2) puis est maintenue (43), lorsque

   - le motocycle (30) est en train de s'arrêter ou est arrêté ou est presque arrêté (40), et
   - une condition d'activation est satisfaite (41).

**2.** Procédé selon la revendication 1, **caractérisé en ce que** la condition d'activation (41) est une reconnaissance de la position du motocycle sur une chaussée en pente (34), en particulier au moyen d'un capteur d'accélération longitudinale (33), et/ou un actionnement d'un élément d'actionnement de frein (5) qui satisfait au moins une condition prédéfinie.

**3.** Procédé selon la revendication 2, **caractérisé en ce que** la condition d'activation (41) est un actionnement ($p'_{HZ}$) de l'élément d'actionnement de frein (5), qui est plus puissant que l'actionnement ($p_{HZ}$) de l'élément d'actionnement de frein (5) qui était nécessaire pour retenir le motocycle.

**4.** Procédé selon au moins l'une quelconque des revendications 1 à 3, **caractérisé en ce que** l'arrêt ou le quasi-arrêt (40) du motocycle (30) est détecté à l'aide d'au moins un capteur de vitesse de rotation de roue (32), en particulier en ce qu'un arrêt ou un quasi-arrêt (40) est détecté lorsqu'une vitesse de rotation de roue ou une grandeur de vitesse de rotation de roue correspondant à la vitesse de rotation de roue est inférieure à une valeur seuil.

**5.** Procédé selon au moins l'une quelconque des revendications 1 à 4, **caractérisé en ce que** la valeur de la pression de freinage développée ou la valeur de l'augmentation de pression de freinage est prédéfinie ou est sélectionnée en fonction d'au moins un paramètre de l'environnement (34) et/ou d'une grandeur d'état du motocycle (30), en particulier en fonction de la pression de freinage nécessaire pour l'arrêt.

**6.** Procédé selon la revendication 5, **caractérisé en ce que** la valeur de la pression de freinage développée ou la valeur de l'augmentation de pression de freinage est sélectionnée en fonction de la raideur de la pente de la chaussée (34) et/ou en fonction de l'état de charge du motocycle (30) et/ou en fonction du type de motocycle (30).

**7.** Procédé selon au moins l'une quelconque des revendications 1 à 6, **caractérisé en ce que** la pression de freinage (43) maintenue dans le circuit de frein de roue (2) est à nouveau diminuée (45) lors d'un démarrage (44) du motocycle (30), notamment par saut et/ou par le biais d'une fonction linéaire.

**8.** Procédé selon la revendication 7, **caractérisé en ce que** le démarrage du motocycle (30) est détecté (44) à l'aide d'au moins une grandeur d'état du motocycle (30), en particulier à l'aide d'un angle de clapet d'étranglement et/ou d'un régime du moteur et/ou d'un couple du moteur.

**9.** Procédé selon la revendication 7 ou 8, **caractérisé en ce que** la diminution de la pression de freinage (45) est effectuée en fonction d'au moins un paramètre de l'environnement (34) et/ou d'une grandeur d'état du motocycle (30), en particulier en fonction d'au moins l'une des grandeurs suivantes : raideur de la pente de la chaussée (34), couple du moteur, pression de freinage d'arrêt, angle de clapet d'étranglement.

**10.** Procédé selon au moins l'une quelconque des revendications 2 à 9, **caractérisé en ce que** dans le cas où la condition d'activation (41) est l'actionnement d'un élément d'actionnement de frein (5), la pression de freinage (43) maintenue dans le circuit de frein de roue (2) est à nouveau diminuée (45) lorsque la condition d'activation (41) se présente à nouveau.

**11.** Système de freinage électronique, en particulier système de freinage intégré, pour un motocycle (30), **caractérisé en ce qu'**un procédé selon au moins l'une quelconque des revendications 1 à 10 est mis en oeuvre dans celui-ci.

Fig. 1

**Fig. 2**

**Fig. 3**

40 ⌇

41 ⌇

42 ⌇

43 ⌇

44 ⌇

45 ⌇

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0548985 B1
- DE 4000212 A1
- DE 3803563 A1
- DE 10316351 A1
- DE 102004051119 A1
- DE 102005003255 A1

**In der Beschreibung aufgeführte Nicht-Patentliteratur**

- Bremsenhandbuch. Vieweg Verlag, Juli 2004, 184-192